# EUROPEAN PATENT SPECIFICATION

(11) **EP 2 710 098 B1**
(45) Date of publication and mention of the grant of the patent: **18.03.2020**
(21) Application number: 12786274.6
(22) Date of filing: 16.05.2012
(51) Int. Cl.: C10L 5/44, C10B 53/02, C10L 9/08, F25J 3/06, F26B 21/10, C10B 7/10, C10B 57/02

(54) **METHOD OF COOLING A TORREFIED MATERIAL**
VERFAHREN ZUR KÜHLUNG EINES TORREFIZIERTEN MATERIALS
PROCÉDÉ DE REFROIDISSEMENT D'UN MATÉRIAU TORRÉFIÉ

(30) Priority: 18.05.2011 SE 1150457
(43) Date of publication of application: 26.03.2014
(73) Proprietor: Bioendev AB, 901 05 Umeå (SE)
(72) Inventor: NORDIN, Anders, 907 52 Umeå (SE); POMMER, Linda, 907 52 Umeå (SE); HÅKANSSON, Katarina, 914 32 Nordmaling (SE); OLOFSSON, Ingemar, 905 80 Umeå (SE); NORDWAEGER, Martin, 906 42 Umeå (SE)
(74) Representative: Kransell & Wennborg KB
(86) International application number: PCT/SE2012/050526
(87) International publication number: WO 2012/158111

(56) References cited:
- WO-A1-2009/151367
- WO-A1-2010/068099
- WO-A1-2010/129988
- WO-A1-2012/142491
- GB-A- 2 448 531
- US-A1- 2009 007 484
- US-A1- 2009 151 251
- US-A1- 2009 250 331
- US-A1- 2011 041 392
- US-A1- 2011 041 392
- US-B2- 7 901 663

## Description

### Technical field

The present invention relates to the field of torrefaction of biomass. In particular, it relates to a method for efficient cooling of torrefied material which also increases energy yield and hydrophobicity of the torrefied product and decreases clogging of the cooling device.

### Background

To be able to compete with and replace fossil fuel energy carriers such as coal, oil and natural gas, lignocellulosic biomass would benefit from some form of pre-treatment method to overcome inherent drawbacks. The pre-treatment method torrefaction has been shown to improve biomass fuel qualities such as energy density, water content and milling, feeding and hydrophobic properties [1-4]. These improvements establish torrefaction as a key process in facilitating an expanding market for biomass raw materials. Torrefaction is a thermal pre-treatment method that normally takes place in a substantially inert (oxygen free) atmosphere at a temperature of about 220-600°C. During the process course a combustible gas comprising different organic compounds is produced from the biomass feedstock in addition to the torrefied biomass.

The process of producing a torrefied material from lignocellulosic biomass can be said to include four stages:
1) a drying step, wherein free water retained in the biomass is removed;
2) a heating step in which physically bound water is released and the temperature of the material is elevated to the desired torrefaction temperature;
3) a torrefaction stage, in which the material is actually torrified and which starts when the material temperature reaches about 220°C -230°C. During this stage, the biomass partly decomposes and gives off different types of volatiles, such as hydroxy acetone, methanol, propanal, short carboxylic acids etc. In particular, the torrefaction stage is characterized by decomposition of hemicellulose at temperatures from 220°C -230°C, and at higher torrefaction temperatures cellulose and lignin also starts to decompose and give off volatiles; cellulose decomposes at a temperature of 305-375°C and lignin gradually decomposes over a temperature range of 250-500°C;
4) a cooling step to terminate the process and facilitate handling. The torrefaction process is terminated as soon as the material is cooled below 220°C -230°C.

WO 2010/129988 discloses a biochar-containing composition comprising biochar having organic matter therein and/or thereon, clay associated, optionally intercalated, with the organic matter, a non-clay mineral and optionally also a plant growth promoter. It also discloses an apparatus for producing the composition, which comprises a biochar kiln or a substoichiometrically operated wood furnace disposed to feed biochar to a mixer vessel partially surrounded by a heating jacket for accepting a heating fluid so as to heat the contents of the vessel. Other feed lines are provided for conveying clay, organic matter etc. to the mixer vessel and a line leads from the mixer vessel so as to convey pillared mixture from the vessel to a crusher, which feeds crushed pillared mixture to torrefier. A heated gas line is provided to take heated exhaust gas from the biochar furnace to a torrefier. Another line leads from an outlet of the torrefier to another crusher, which feeds crushed torrefied product into a post-mixer. A drain line leads from a heating jacket to the post-mixer so as to take condensate formed in heating jacket and feed it to post-mixer. Yet another line takes the slurry formed in the post mixer to a pelletiser so as to produce the composition as granules.

US 2011/00411392 discloses systems and methods for producing torrefied lignocellulosic material. In one method, biomass material is fed via a conduit to a drying device capable of removing between 85 and 98% of the moisture present in the biomass. The moisture present in the biomass is removed by energy supplied via hot gas. The dryer may remove a sufficient amount of moisture such that an absolute moisture content of the dried lignocellulosic material is less than 15% of the total weight of the lignocellulosic material. A hot gas in conduit is the result of flue gas in another conduit from a combustion unit after the flue gas has been cooled slightly by an indirect heat exchanger that facilitates recycling the energy in the hot flue gas back to the torrefaction reactor for use in heating the reactor. Torrefied biomass exiting from the torrefaction reactor at a temperature of about 220 to 300 °C may be fed to a rotary valve at the inlet to a fluidbed cooler 29 (or other direct contact cooler). The fluidbed cooler may be a combination indirect cooler, using water as the cooling medium, and direct cooler, using cooled nitrogen rich stream or any other inert gas from heat exchanger and make-up nitrogen from the PSA (or other gas separation type equipment) plant or any other inert gas to cool the torrefied biomass entering the fluidbed cooler to about 90 °C in an oxygen free or near oxygen free environment. The cooled torrefied biomass may be discharged from the fluidbed cooler via a rotary valve (or similar device to assure the fluidbed cooler operates in an oxygen-free, or substantially oxygen-free, environment). Cool torrefied biomass in stream discharged from the fluidbed cooler may be mixed with torrefied biomass solids stream separated in the cyclone (discharged through a rotary valve or other such equipment to ensure an oxygen-free or near oxygen-free environment is maintained in the cyclone) to produce a stream for further processing in a pelletizing unit or other product handling process for compacting or packaging the torrefied biomass solids.

### Summary of the present disclosure

During the cooling process of torrefied material, the material continues to release gases until the temperature of the material is decreased below about 200°C. However, the material need to be further cooled to below 130°C to ensure safe self ignition temperatures. Therefore, in the prior art, torrefied material have been directly cooled in a cooling device such as a screw cooler to decrease the temperature to below 130°C, see e.g. WO2009/151367 A1. One problem with this approach is that the gases given off from the torrefied material during the cooling process will condense on cold surfaces within the cooling device leading to fouling or clogging of said device. Another problem with the cooling processes of torrefied material described in the prior art is that the gases given of during the cooling process leads to a decrease in energy yield of the torrefied product. There is thus a demand for an improved method for cooling torrefied material.

The present inventors have solved the problems described above by a method for cooling torrefied material. Said method includes that at least a part of cooled torrefied material is mixed-back with hot torrefied material before the hot material is introduced into a cooling device for further cooling of the torrefied material. This method has several advantages compared to the methods described in the prior art:
1) Gases given off by the hot material within the cooling device, and torrefaction gases introduced into the cooling device, will condense on the cold torrefied material which will decrease condensation on cold surfaces within the cooling device which in turns decrease clogging of said cooling device.
2) Condensation of gases on the torrefied material in the mixing step or in the cooling device, increases the energy yield of the final torrefied product,
3) Condensation of gases on the torrefied material in the mixing step or in the cooling device increases the hydrophobicity of the final torrefied product, which often is a highly desired characteristic of the torrefied products.

Accordingly the present invention relates to a torrefaction method according to claim 1.

Another, non-claimed, aspect of the invention relates to a torrefaction system, comprising:
a torrefaction reactor for converting an optionally pretreated biomass to a torrefied material and torrefaction gases;
an arrangement comprising means for cooling and optionally pelletizing the torrefied material, said arrangement comprising an inlet connected to an outlet of the torrefaction reactor;
a mixing zone for mixing the torrefaction gases and/or torrefied material from the torrefaction reactor with material from said arrangement such that torrefaction gas components may condense on the material from said arrangement, wherein the mixing zone is connected to an outlet of said arrangement via means for material transport.

### Brief description of the figures

Figure 1 shows a torrefaction system comprising a torrefaction reactor, connected to an arrangement for cooling torrefied material.
Figure 2a and 2b show two different torrefaction reactors.
Figure 3 and 4 show time and temperature of a biomass in a torrefaction reactor connected to an arrangement for cooling torrefied material. The arrows indicate quench cooling with cold torrefied material.

### Definitions:

Torrefaction:
   A thermal pre-treatment method that takes place in a virtually inert (oxygen-reduced or oxygen free) atmosphere at a temperature above 220 °C but below 600 °C and which produces a torrefied biomass and combustional gases. During a torrefaction stage, parts of the biomass, in particular hemicellulose, decompose and give off different types of organic volatiles. In a torrefaction process starting from raw biomass, the actual torrefaction stage is preceded by a drying stage wherein free water retained in the biomass is removed and by a heating stage wherein the biomass is heated to the desired torrefaction temperature.
Heating zone:
   A specific region of a compartment in a torrefaction reactor, located upstream of a torrefaction zone in relation to a biomass inlet of a torrefaction reactor, comprising means for specifically regulating the temperature in said specific region and wherein the temperature of a biomass is increased to a temperature near the desired torrefaction temperature prior to torrefaction.
Torrefaction zone:
   A specific region of a compartment in a torrefaction reactor, located downstream of a heating zone in relation to a biomass inlet of a torrefaction reactor, comprising means for specifically regulating the temperature in said specific region and wherein the temperature of a previously heated biomass is kept virtually constant at the desired torrefaction temperature for a desired torrefaction time wherein a desired torrefaction temperature is in a range between 220 °C to 600 °C.
Drying zone
   A specific region of a compartment in a torrefaction reactor, located upstream of a heating zone in relation to a biomass inlet of a torrefaction reactor, comprising means for regulating the temperature in said specific region and wherein a biomass is dried to a water content below 10 % prior to heating.
Connecting zone
   A specific region in a torrefaction reactor located immediately upstream of a heating zone and immediately downstream of a torrefaction zone in relation to a biomass inlet of said torrefaction reactor.
Torrefaction time:
   The time the temperature of the material is kept virtually constant at the torrefaction temperature. The residence time of the material in the torrefaction zone may be referred to as the torrefaction time.

### Detailed description

In a first aspect the invention relates to a torrefaction method, comprising the steps of:
a) subjecting an optionally pretreated biomass to torrefaction to produce a torrefied material and torrefaction gases;
b) cooling and optionally pelletizing the torrefied material from step a), which cooling comprises transportation of the torrefied material through a cooled drum by means of a screw;
c) mixing at least part of the cooled torrefied material from step b) with at least part of the torrefied material from step a) such that torrefaction gas components condense on the material from step b).

Step b) comprises transportation of the torrefied material through a cooling device. Said cooling device is a drum and the transportation within said drum is mediated by means of a screw. In one embodiment the drum is cooled by means for cooling wherein the means for cooling could be heat exchangers. In another embodiment the screw is cooled. In a preferred embodiment the cooling device is a screw cooler. In another embodiment the cooling device comprises a water application device for applying water to the torrefied material. The temperature of the material from step b) is less than 100 °C. The torrefied material which has been cooled with the back-mixed (re-circulated) material is transported through the cooling device together with the backmixed material such that torrefaction gas components can condense on the backmixed material, particulary during the mixing but also in the cooling device. In one embodiment torrefaction gases can also be sucked in to the cooling device together with the torrefied material and cold pellets. If torrefaction gases is sucked in to the cooling device it may be preferred to direct the gases from the cooling device out from the cooling device at a position upstream of an outlet for the torrefied product so that gases having a relatively high content of condensable components can be used for combustion. In other cases it is important to get a product with high hydrophobicity and hence the gases should be diverted from the cooling device later. Therefore, according to one embodiment the cooling device comprise a cooling device gas outlet upstream of an outlet for the torrefied material. The gas outlet may for example be moveable along the cooling device so that the position of the gas outlet can be adjusted. According to another embodiment the torrefaction gases are diverted out of the system for cooling a torrefied material after the mixing zone but prior to the cooling device in order to minimize clogging of the cooling device. In one embodiment the temperature of the diverted gas is adjusted by controlling the amount of cooled torrefied material supplied in the mixing zone. By adjusting the temperature it is for example possible to save organic acids in the gas while tar components condense on the material.

There is a high demand for pellets of torrefied material on the market. The inventors have however found that it is particularly difficult to produce pellets of torrefied material having a sufficient hydrophobicity. This is probably due to the fact that the torrefied material is disintegrated (e.g. refined or ground) in the pelletizing process, such that the hydrophobic surface of the torrefied material is broken down and the interior of individual pieces of torrefied material is exposed. But if the pellets are mixed with torrefied material from the torrefaction reactor such that torrefaction gases condense on the surfaces of the pellets, the hydrophobicity of the whole pellets is increased. Thus, in one embodiment the torrefied material is pelletized in step b) and mixed with the torrefied material from step a) in step c) and then separated from the torrefied material. The pelletized material may for example be separated from the torrefied material by means of a sieve, for example a sieve of mesh or by wind sieving. That is, the separation may be based on size as the pellets are normally smaller than the pieces of torrefied material, in particular when they are derived from wood chips. The separation may also be based on density.

In one embodiment the biomass is dried and optionally heated prior to step a) to generate gases which are not mixed with the torrefaction gases before or in step b). In this way, the humidity of the torrefaction gases may be decreased such that they may be combusted efficiently even though some of their organic material have condensed on the back-mixed material.

In one embodiment the biomass is lignocellulosic biomass, and in a preferred embodiment the biomass is a wood material, such as wood chips.

Generally, the pellets mentioned in the present disclosure can be replaced by other compacted materials such as briquettes. Similarly the pelletizing mentioned in the present disclosure can generally be replaced by other methods of compacting biomass or solid fuels, such as briquette production. Another, non-claimed, aspect of the invention relates to a torrefaction system, comprising:
a torrefaction reactor for converting an optionally pretreated biomass to a torrefied material and torrefaction gases;
an arrangement comprising means for cooling and optionally means for pelletizing the torrefied material, said arrangement comprising an inlet connected to an outlet of the torrefaction reactor;
a mixing zone for mixing the torrefaction gases and/or torrefied material from the torrefaction reactor with material from said arrangement such that torrefaction gas components may condense on the material from said arrangement, wherein the mixing zone is connected to an outlet of said arrangement via means for material transport.

In one embodiment the mixing zone is arranged in the connection between the outlet of the torrefaction reactor and the inlet of the arrangement.

When the arrangement comprises means for pelletizing the torrefied material, said system may for example further comprisea device for separating pellets from torrefied material. In one embodiment the separating device is arranged in the arrangement upstream of the means for pelletizing the torrefied material. Also, it may be arranged downstream of the means for cooling the torrefied material. Thus, the back-mixed material and the torrefied material from the torrefaction reactor may be transported through the means for cooling together, In one embodiment the separating device is a sieve or a mesh. In one embodiment the biomass is lignocellulosic biomass and in a preferred embodiment the biomass is wood such as wood chips.

### Detailed description of exemplary embodiments

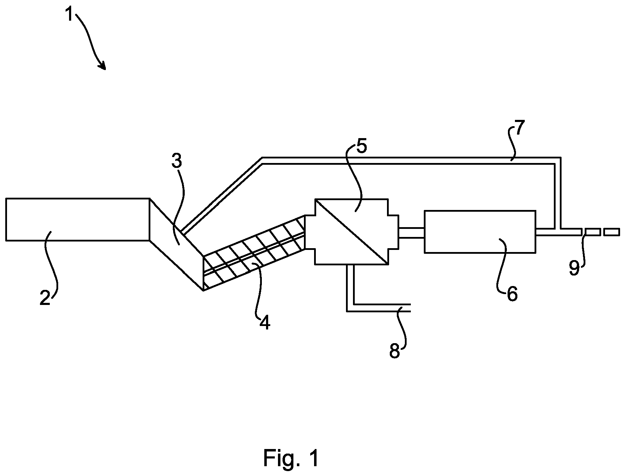

Figure 1a shows a system for cooling a torrefied material (1), comprising a torrefaction reactor (2) for converting biomass to a torrefied material having a temperature of above 220 °C and torrefaction gases. In connection to an outlet of the torrefaction reactor (2), a mixing zone (3) for mixing cold pellets of torrefied material with hot torrefied biomass from the torrefaction reactor is arranged. The torrefied material that has passed the mixing zone (3) is fed together with the cold pellets into a cooling device (4) for further cooling the torrefied material. Torrefaction gases can also be sucked in to the mixing zone and/or into the cooling device (4) together with the torrefied material and cold pellets. Components of said torrefaction gases, as well as components of gases given of from the torrefied biomass, will condensate on the cooled pellets, which increases the hydrophobicity and energy yield of the pellets and decreases condensation on the interior surfaces of the cooling device (4), which thus reduces clogging of the cooling device (4). The transport of the torrefied material in the cooling device (4) is mediated by the rotation of a screw cooler. The cooled torrefied material exits the cooling device (4) and pellets are separated from the torrefied biomass in a separating device (5) wherein the pellets exits the system for cooling a torrefied material (1) through a first pellet outlet (8). The cooled torrefied biomass is fed into a pelletizer (6) where it is pelletized into pellets. At least part of these pellets are fed back to the mixing zone (3), via means for pellets transport (7), where the pellets are used to cool hot torrefied material from the torrefaction reactor (2). Optionally, part of the pellets from the pelletizer are not fed back to mixing zone. Instead, they may be recovered from a second pellets outlet (9).

The skilled person understands that the pelletizer (6), the separating device and the first pellets outlet (8) can be taken out of the system such that, instead, one part of the cooled torrefied material from the cooling device (4) is fed back via the means for transport (7) and another part of the cooled torrefied material is recovered through the pellets outlet (9).

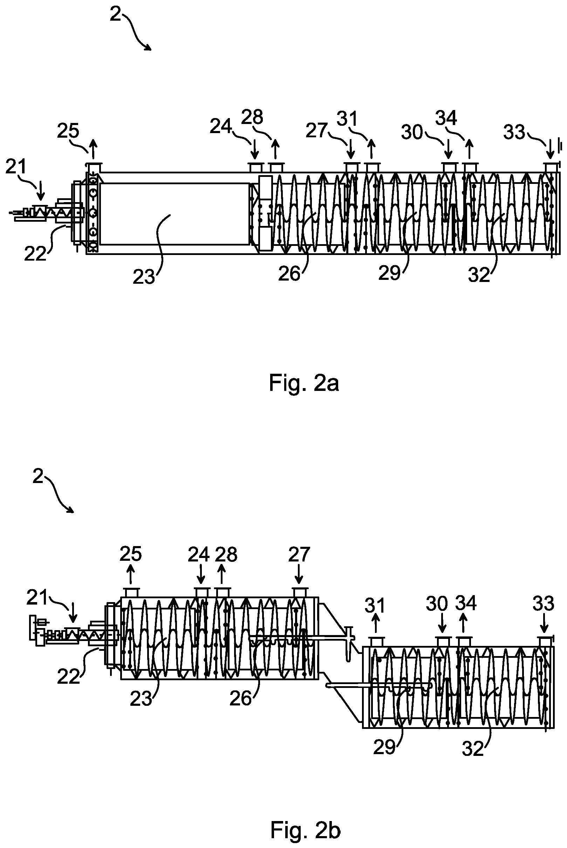

Figure 2a shows a torrefaction reactor having a biomass inlet (21) wherein the biomass is introduced in the torrefaction reactor by means of a feeding screw (22). The biomass is dried in a drying zone (23)) wherein heat is supplied to the drying zone (23) by means of a heating media (e.g. hot gases) through a drying zone heating media inlet (24) and wherein the heating media leaves the drying zone through the drying zone heating media outlet (25). Dried biomass is transported through the drying zone (23) at a speed regulated by the feeding speed in the biomass inlet (21) and enters the heating zone (26) where the temperature of the biomass is elevated to a temperature near the desired torrefaction temperature. The heat is supplied to the heating zone (26) by means of a heating media through a heating zone heating media inlet (27) which leaves the heating zone through a heating zone heating media outlet (28). The heated material enters a first torrefaction zone (29) in which the temperature can be controlled by introducing heating media and/or cooling media in the first torrefaction zone heating/cooling media inlet (30) wherein said heating/cooling media exits the first torrefaction zone through the torrefaction zone heating/cooling media outlets (31). The biomass thereafter enters a second torrefaction zone (32) heating/cooling media can be supplied to the second torrefaction zone via the torrefaction zone cooling media inlet (33) and said heating/cooling media exits the torrefaction zone via a torrefaction zone cooling media outlet (34). The material transport in the heating zone (26) and torrefaction zones (29, 32) is driven by a common transport screw which is attached to a drum enclosing the heating zone (26) and torrefaction zones (29, 32).

Figure 2b shows a torrefaction reactor having a biomass inlet (21) wherein the biomass is introduced in the torrefaction reactor by means of a feeding screw (22). The biomass is dried in a drying zone (23) wherein heat is supplied to the drying zone (23) by means of a heating media (e.g. hot gases) through a drying zone heating media inlet (24) and wherein the heating media leaves the drying zone through the drying zone heating media outlet (25). Dried biomass is transported through the drying zone (23) at a speed regulated by the feeding speed in the biomass inlet (21) and enter the heating zone (26) where the temperature of the biomass is elevated to a temperature near the desired torrefaction temperature. The heat is supplied to the heating zone (26) by means of a heating media through a heating zone heating media inlet (27) which leaves the heating zone through a heating zone heating media outlet (28). The transport of the biomass in the heating zone (26) is mediated by a heating zone transport screw which is fixed to the inner wall of a drum enclosing the heating zone (26). The material transport in the heating zone is controlled by the rotational speed of said drum and the biomass exits the heating zone through a connecting zone and enters a first torrefaction zone (29) and thereafter a second torrrefaction zone (32). The temperature in the torrefaction zone can be controlled by introducing heating media and/or cooling media in the torrefaction zone heating/cooling media inlets (30, 33) wherein said heating/cooling media exits the torrefaction zone through the torrefaction zone heating/cooling media outlets (31, 34). The biomass transport in the first torrefaction zone (29) and second torrefaction zone (32) is driven by a common transport screw which is attached to a drum enclosing the first torrefaction zone (29) and second torrefaction zone (32). The material transport in the torrefaction zones (29, 32) is controlled by rotational speed of said drum can be rotated independently of the drum enclosing the heating zone. Hence the material transport in the torrefaction zone can be controlled independently of the material transport in the heating zone.

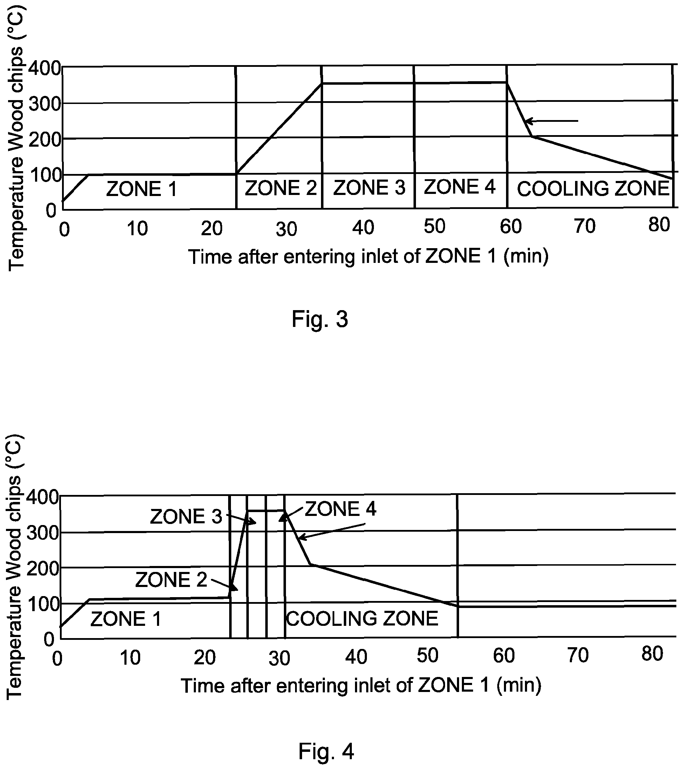

Figure 3 and 4 show typical temperatures of the biomass in the different zones in the torrefaction reactor disclosed in figures 2a and 2b, wherein the torrefaction reactor is connected to the an arrangement for cooling torrefied material as shown in figure 1. Zone 1 represents the drying zone (2), zone 2 represents the heating zone (26), zone 3 represents the first torrefaction zone (29) and zone 4 represents the second torrefaction zone (32). In the drying zone (23) the biomass is dried, typically to a water content of 2-10 % (w/w) and the temperature is elevated to about 100 °C. In the heating zone (26), the temperature of the material is elevated to close to the desired torrefaction temperature, which in this example is 350 °C. In the torrefaction zones the temperature is kept virtually constant at the desired torrefaction temperature for a time corresponding to the desired torrefaction time. The cooling zone represents the arrangement for cooling torrefied material described in figure 1. The arrow indicates the initial quench-cooling in the mixing zone (3) and thereafter the torrefied material is cooled to a temperature below 100 °C in the cooling device (4) for further cooling the torrefied material.

### REFERENCES

[1] M. J Prins et al. More efficient biomass gasification via torrefaction. Energy 2006, 31, (15), 3458-3470.
[2] P. C. A. Bergman et al. Torrefaction for Entrained Flow Gasification of Biomass; Report C--05-067; Energy Research Centre of The Netherlands (ECN): Petten, The Netherlands, July 2005;
[3] K. Håkansson et al. Torrefaction and gasification of hydrolysis residue. 16th European biomass conference and exhibition, Valencia, Spain. ETAFlorence, 2008.
[4] A. Nordin, L. Pommer, I. Olofsson, K. Håkansson, M. Nordwaeger, S. Wiklund Lindström, M. Broström, T. Lestander, H. Orberg, G. Kalén, Swedish Torrefaction R&D program. First Annual Report 2009-12-18 (2009).

## Claims

1. A torrefaction method, comprising the steps of:
a) subjecting biomass to torrefaction to produce a torrefied material and torrefaction gases;
b) cooling the torrefied material from step a), which cooling comprises transportation of the torrefied material through a cooled drum by means of a screw;
c) mixing at least part of the cooled torrefied material from step b) with at least part of the torrefied material from step a) and transporting the torrefied material from step a) through the cooled drum together with the cooled torrefied material from step b) such that torrefaction gas components can condense on the material from step b), in particular during the mixing but also in the cooled drum,
wherein the temperature of the material from step b) is less than 100°C.

2. Method according to claim 1, wherein the torrefied material is compacted in step b) and mixed with the torrefied material from step a) in step c) and then separated from the torrefied material.

3. Method according to claim 2, wherein the compacted material is separated by means of a sieve.

4. Method according to any one of the preceding claims, wherein the biomass is dried prior to step a) to generate gases which are not mixed with the torrefaction gases before or in step b).

## Patentansprüche

1. Torrefizierungsverfahren, das die folgenden Schritte umfasst:
a) das Unterziehen von Biomasse gegenüber Torrefizierung, um ein torrefiziertes Material und Torrefizierungsgase zu erzeugen;
b) das Kühlen des torrefizierten Materials aus Schritt a), wobei das Kühlen den Transport des torrefizierten Materials durch eine gekühlte Trommel mittels einer Schnecke umfasst;
c) das Vermischen zumindest eines Teils des gekühlten torrefizierten Materials aus Schritt b) mit zumindest einem Teil des torrefizierten Materials aus Schritt a) und das Transportieren des torrefizierten Materials aus Schritt a) durch die gekühlte Trommel zusammen mit dem gekühlten torrefizierten Material aus Schritt b), so dass Torrefizierungsgaskomponenten auf dem Material aus Schritt b) kondensieren können, insbesondere während des Vermischens, aber auch in der gekühlten Trommel,
wobei die Temperatur des Materials aus Schritt b) weniger als 100 °C beträgt.

2. Verfahren nach Anspruch 1, wobei das torrefizierte Material in Schritt b) verdichtet wird und in Schritt c) mit dem torrefizierten Material aus Schritt a) vermischt wird und dann von dem torrefizierten Material getrennt wird.

3. Verfahren nach Anspruch 2, wobei das verdichtete Material mittels eines Siebs getrennt wird.

4. Verfahren nach einem der vorhergehenden Ansprüche, wobei die Biomasse vor Schritt a) getrocknet wird, um Gase zu erzeugen, die nicht mit den Torrefizierungsgasen zuvor oder in Schritt b) vermischt werden.

## Revendications

1. Procédé de torréfaction, comprenant les étapes consistant à :
a) soumettre une biomasse à une torréfaction afin de produire un matériau torréfié et des gaz de torréfaction ;
b) refroidir le matériau torréfié provenant de l'étape a), ledit refroidissement comprend le transport du matériau torréfié à travers un tambour à refroidissement au moyen d'une vis ;
c) mélanger au moins une partie du matériau torréfié refroidi provenant de l'étape b) avec au moins une partie du matériau torréfié provenant de l'étape a) et le transport du matériau torréfié provenant de l'étape a) à travers le tambour à refroidissement conjointement au matériau torréfié refroidi provenant de l'étape b) de telle sorte que les composants de gaz de torréfaction peuvent se condenser sur le matériau provenant de l'étape b), en particulier pendant le mélange mais également dans le tambour à refroidissement,
dans lequel la température du matériau provenant de l'étape b) est inférieure à 100 °C.

2. Procédé selon la revendication 1, dans lequel le matériau torréfié est compacté dans l'étape b) et mélangé avec le matériau torréfié provenant de l'étape a) dans l'étape c) et ensuite séparé du matériau torréfié.

3. Procédé selon la revendication 2, dans lequel le matériau compacté est séparé au moyen d'un tamis.

4. Procédé selon l'une quelconque des revendications précédentes, dans lequel la biomasse est séchée avant l'étape a) afin de générer des gaz qui ne sont pas mélangés avec les gaz de torréfaction avant ou pendant l'étape b).
